# EUROPÄISCHE PATENTSCHRIFT

(11) **EP 1 902 913 B1**
(45) Veröffentlichungstag und Bekanntmachung des Hinweises auf die Patenterteilung: **29.02.2012**
(21) Anmeldenummer: 07017935.3
(22) Anmeldetag: 13.09.2007
(51) Int. Cl.: B60R 25/02, E05B 49/00, G07C 9/00

(54) **Schliessystem, insbesondere für ein Kraftfahrfzeug**
Locking system, in particular for a motor vehicle
Système de fermeture, en particulier pour un véhicule automobile

(30) Priorität: 20.09.2006 DE 102006044094
(43) Veröffentlichungstag der Anmeldung: 26.03.2008
(73) Patentinhaber: Marquardt GmbH, 78604 Rietheim-Weilheim (DE)
(72) Erfinder: Mattes, Johannes, 78567 Fridingen (DE); Weisser, Dietmar, 78532 Tuttlingen (DE); Koch, Andreas, 78532 Tuttlingen (DE)
(74) Vertreter: Otten, Herbert

(56) Entgegenhaltungen:
- EP-A- 1 619 093
- EP-A- 1 623 893
- WO-A-2007/118469

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung der elektromagnetischen Signale. Im bestimmungsgemäßen Betrieb ist zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist. Der ersten Einrichtung ist eine Antenne zur Übertragung der Signale zugeordnet.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, daß der Benutzer den Schlüssel mit sich führt, Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt.

Für die erweiternden Keyless-Funktionalitäten genügt es, daß der Benutzer den Schlüssel mit sich führt. Um jedoch die jeweils gewünschte und/oder zulässige Keyless-Funktionalität auszulösen, ist es notwendig, daß das Schließsystem den jeweiligen Ort des Schlüssels feststellen kann, insbesondere ist ein wesentliches Qualitätsmerkmal die exakte Abgrenzung zwischen dem Innen- und dem Außenbereich des Kraftfahrzeugs. Deshalb ist eine präzise Regelung der Ausgangsleistung der ersten Einrichtung wünschenswert, wobei bei den heutigen Schließsystemen gemäß der Gattungsbildenden EP 1 619 093 A1 sowie der EP 1 623 893 A1 die Leistungsregelung der ersten Einrichtung lediglich durch Regelung der Versorgungsspannung für die erste Einrichtung erfolgt. Ein exakte Bestimmung der Leitungslänge von Zuleitungen und von Toleranzen in der Antenne erfolgt jedoch nicht. Es besteht daher die Gefahr, daß die Genauigkeit der Ortsbestimmung für den Schlüssel nicht in allen Fällen ausreichend ist, was wiederum die Sicherheit des Schließsystems o. dgl. beeinträchtigt.

Desweiteren wird für die Keyless-Funktionalitäten zu deren Ablaufsteuerung eine zusätzliche Steuereinrichtung benötigt oder es muß eine zusätzliche Hardware in der ersten Einrichtung vorgesehen werden. Handelt es sich bei der Keyless-Funktionalität um eine Sonderausstattung für das Kraftfahrzeug, so muß diese zusätzliche Einrichtung auch bei den Standardfahrzeugen berücksichtigt werden, was diese Fahrzeuge ohne Keyless-Funktionalität mit höheren Kosten und größeren Bauräumen belastet.

Der Erfindung liegt die Aufgabe zugrunde, die Funktionssicherheit des mit Keyless-Funktionalität ausgestatteten Schließsystems zu verbessern, insbesondere die Ortsbestimmung für den Schlüssel zu verbessern.

Diese Aufgabe wird bei einem gattungsgemäßen Schließsystem durch die kennzeichnenden Merkmale des Anspruchs 1 gelöst.

Beim erfindungsgemäßen Schließsystem ist die Antenne wie in der nicht vorveröffentlichten WO 2007/118469 A1 als niederfrequente (LF-) Antenne ausgebildet und mit einem eigenen, von der ersten Einrichtung im wesentlichen unabhängigen Steuergerät versehen. Das Steuergerät dient zur Steuerung und/oder Regelung der Antennenleistung und/oder der zu sendenden Daten. In kostengünstiger sowie kompakter Ausgestaltung umfaßt das Steuergerät für die LF-Antenne einen Mikroprozessor. Der Mikroprozessor kann zum einen einen Operationsverstärker ansteuern, der für die Leistungsregelung der Sendeleistung an der Antenne dient. Zum anderen kann der Mikroprozessor einen Leistungshalbleiter als Ein-IAus-Schalter für die Antenne sowie zum Aufmodulieren der Daten auf das Trägersignal ansteuern. Vorteilhafterweise bleibt dadurch die Leitungslänge von Zuleitungen ohne Einfluß und eventuelle Toleranzen in der Antenne werden automatisch ausgeglichen, so daß eine exakte Funktion des Schließsystems in allen Fällen gewährleistet ist. Außerdem wird keine zusätzliche Steuereinrichtung oder eine zusätzliche Hardware in der ersten Einrichtung für die Keyless-Funktionalitäten benötigt. Weitere Ausgestaltungen der Erfindung sind Gegenstand der Unteransprüche.

In weiterer Ausgestaltung bietet es sich an, daß das Steuergerät und die Antenne in einem gemeinsamen Gehäuse integriert angeordnet sind. Dadurch wird eine kompakte Einheit geschaffen; die in einfacher Art und Weise in das Kraftfahrzeug einzubauen ist. Das der Antenne zugeordnete Steuergerät besitzt eine Leitung zur Verbindung für den Datenaustausch mit dem Kraftfahrzeug. Alternativ oder zusätzlich dient die Leitung für die vom Fahrzeug erfolgende Spannungsversorgung der Antenne mitsamt Steuergerät, In üblicher Weise kann die dem Datenaustausch dienende Leitung in der Art eines Datenbus ausgebildet sein. Die Leitung stellt zweckmäßigerweise auch eine Verbindung zur ersten Einrichtung her, in der die Ablaufsteuerung für das Schließsystem sowie die Auswertung der übertragenen Daten erfolgt. Um zusätzliche Steuereinrichtungen im Kraftfahrzeug einzusparen, kann es sich bei der ersten Einrichtung um ein im allgemeinen bereits vorhandenes elektronisches Zündschloß für das Kraftfahrzeug handeln.

In einer Weiterbildung sendet die erste Einrichtung ein erstes elektromagnetisches Signal für die zugehörige, beispielsweise als Transponder- und/oder Funkschlüssel ausgebildete zweite Einrichtung als Wecksignal. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung am und/oder im Kraftfahrzeug bestimmen kann. Der Standort der zweiten Einrichtung in Bezug auf die erste Einrichtung am und/oder im Kraftfahrzeug wird anschließend mit einem vierten Signal als Rückantwortsignal von der zweiten zur ersten Einrichtung gesendet. Sind diese Signale erfolgreich übermittelt, so wird schließlich die Authentikation der zweiten Einrichtung mittels weiterer fünftes Signale als codierte Betriebssignale durchgeführt. Sind somit die für das Wecken sowie die Bereichsabgrenaung notwendigen Vorbedingungen nicht erfüllt, so wird die an sich aufwendige Authentikation gar nicht durchgeführt, womit eine effizientere Betriebsweise für das Schließsystem ermöglicht ist. Das der Authentikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizient der Betriebsweise des Schließsystems möglich.

Bei einem mit einer zentralen Steuereinrichtung arbeitenden Keyless-System, wie es bisher verwendet wird, wird bei einer Betätigung eines Türgriffs an einer Autotür die zentrale Steuereinrichtung geweckt. Das bewirkt wiederum einen hohen Stromverbrauch im Kraftfahrzeug. Mit Hilfe der erfindungsgemäß ausgestalteten Antenne besteht vorteilhafterweise die Möglichkeit, das Keyless-System stufenweise mittels der beschriebenen Signalabfolge zu wecken. Durch das Einlesen der vom Türgriff erzeugten Signale direkt im Steuergerät der Antenne erkennt diese selbständig, ob ein zum Fahrzeug gehörender Schlüssel vorhanden ist oder nicht. Nur im ersten Fall wird dann das restliche Fahrzeug vom Steuergerät geweckt.

Besonders bevorzugt ist, für das Weck- und/oder das Bereichsabgrenzungssignal ein induktives Signal zu verwenden, indem die Trägerwelle für das erste Signal und/oder das dritte Signal eine im induktiven, niederfrequenten (NF-)Bereieh liegende Frequenz aufweist. Aufgrund der begrenzten Reichweite eines induktiven Signals läßt sich somit der Wirkbereich für das Schließsystems auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz 120 kHz, 125 kHz o. dgl. betragen. Weiterhin ist bevorzugt, für das Selektionssignal und/oder das Rückantwortsignal und/oder das codierte Betriebssignal ein Funksignal zu verwenden, indem die Trägerwelle für das zweite Signal und/oder das vierte und/oder das fünfte Signal eine im höherfrequenten (RF-)Bereich liegende Frequenz aufweist. Dadurch ist aus Komfortgründen für den Benutzer ein vergrößerter Wirkbereich gegeben. Beispielsweise kann die Frequenz für die RF-Trägerwelle in etwa 315 MHz, 433 MHz, 868 MHz o. dgl. betragen.

Die als LF-Antenne dienende Antenne kann eine Spule sowie gegebenenfalls einen zur Spule in Reihe geschalteten Kondensator in der Art eines Schwingkreises umfassen. Zweckmäßigerweise besitzt das Kraftfahrzeug wenigstens zwei LF-Antennen. Beispielsweise ist eine LF-Antenne dem Innenraum sowie eine weitere LF-Antenne dem Kofferraum des Kraftfahrzeugs zugeordnet. In kostengünstiger Anordnung ist folglich mit lediglich zwei LF-Antennen eine Innen-/Außen-Abgrenzung am Kraftfahrzeug ermöglicht. Wird eine Seitenerkennung für den Außenraum am Kraftfahrzeug gewünscht, so kann gegebenenfalls das Kraftfahrzeug eine der fahrerseitigen und/oder der beifahrerseitigen Autotüre des Kraftfahrzeugs zugeordnete LF-Antenne besitzen. In entsprechender Weise besitzt die zweite Einrichtung einen induktiven Empfänger, um die von den jeweiligen LF-Antennen im Kraftfahrzeug gesandten Signale aufzunehmen. Zwar kann je nach Fahrzeugtyp und/oder Fahrzeuggröße und/oder entsprechend dem Anforderungsprofil des Benutzers die Anzahl der Antennen unterschiedlich groß sein. Mit Hilfe der erfindungsgemäßen Antenne kann jedoch in einfacher Weise die Anzahl der pro Fahrzeug benötigten Antennen den jeweiligen Bedürfnissen angepaßt werden.

In einer einfachen Schaltungsanordnung ist der Leistungshalbleiter in Reihe mit dem einen Anschluß der Spule sowie gegebenenfalls mit dem Kondensator geschaltet. Der andere Anschluß der Spule ist wiederum in Reihe mit dem Operationsverstärker geschaltet. Soweit mehrere Antennen im Kraftfahrzeug befindlich sind, kann es sich aus Kostengründen anbieten, daß lediglich ein Steuergerät für die Ansteuerung von mehreren LF-Antennen vorgesehen ist.

Zusammenfassend läßt sich für eine bevorzugte Ausgestaltung der Erfindung sagen, daß eine Art von intelligenter Antenne für den Einsatz in einem Keyless-Fahrzeug geschaffen ist. Die intelligente Antenne besteht aus einer Kombination der bisherigen LF-Antenne mit einem Steuergerät, das für die Regelung der Antennenleistung und/oder der Steuerung der zu sendenden Daten dient. Die Verbindung der intelligenten Antenne zum Fahrzeug erfolgt über einen Datenbus, bei dem es sich beispielsweise um ein LIN-, CAN- o. dgl. Bussystem handelt.

Die mit der Erfindung erzielten Vorteile bestehen insbesondere darin, daß die erfindungsgemäße Antenne ohne weitere Hardware in ein Keyless-System am Fahrzeug integriert werden kann. Die Ablaufsteuerung für die Antenne und/oder die Auswertung der übermittelten Daten erfolgt in einem übergeordnetem Steuergerät entsprechend der ersten Einrichtung, beispielsweise in einem elektronischen Zündschloß, wozu lediglich dessen Software erweitert werden muß. Für die Kommunikation zwischen dem Schlüssel und dem Fahrzeug kann die bestehende Funkverbindung verwendet werden. Folglich gestattet die Erfindung eine Kostenoptimierung, insbesondere ist kein Kosten-Overhead für entsprechende Fahrzeuge ohne Keyless-Funktionalität gegeben. Desweiteren führt die erfindungsgemäße Antenne zur Standardisierung für die Keyless-Komponenten und bietet auch eine schnelle, einfache Adaptierung am Fahrzeug.

Eine Steigerung der Funktionsfähigkeit für das Schließsystem ergibt sich daraus, daß die Diagnose für die Antenne ohne zusätzliche Beschaltung mit Hilfe des Steuergeräts ermöglicht ist. Weiter ist in einfacher Art und Weise mittels Einstellung entsprechender Parameter im Steuergerät eine Anpassung der Antenne an andere Fahrzeugtypen bzw. Fahrzeugvarianten, wie Kombi, Limousine, Van, Cabrio o. dgl., möglich. Schließlich wird auch noch die Abhängigkeit der Sendeleistung, insbesondere für die Weckfelder, von der Batteriespannung im Kraftfahrzeug weitgehend ausgeglichen.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem im Kraftfahrzeug,
- Fig. 3: ein schematisches Blockschaltbild des ID-Gebers mit einem Diagramm zur Übertragung der Signale,
- Fig. 4: ein schematisches Blockschaltbild zur Ausgestaltung der Antenne,
- Fig. 5: ein schematisches Blockschaltbild in weiterer Ausgestaltung für die Anordnung von mehreren Antennen und
- Fig. 6: ein schematisches Blockschaltbild für eine weitere Ausführung der Antenne.

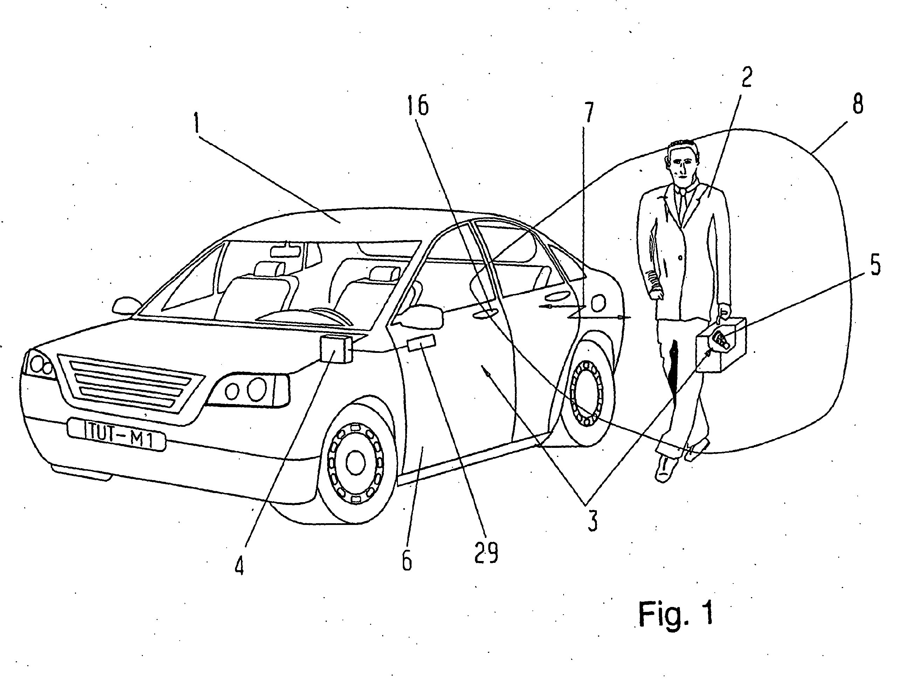

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

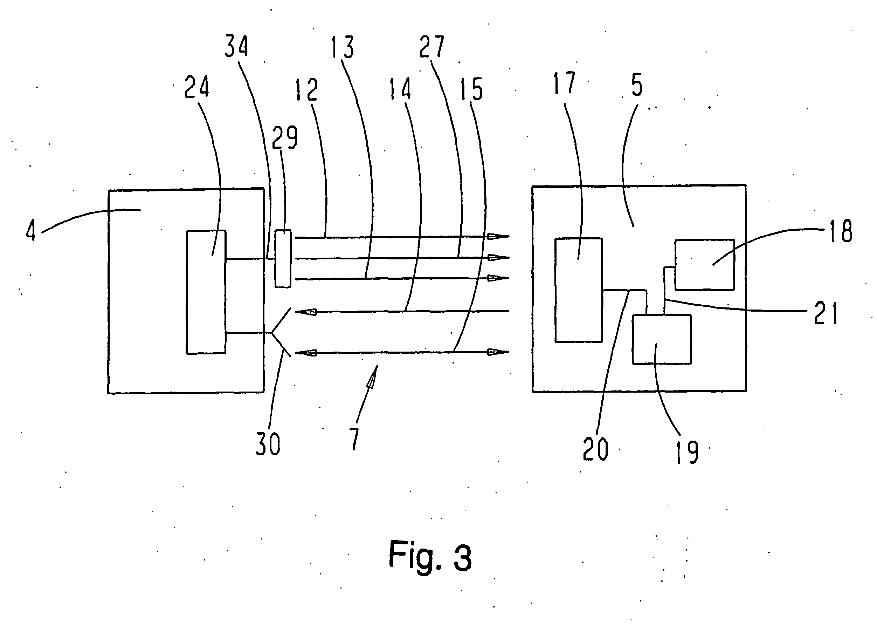

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

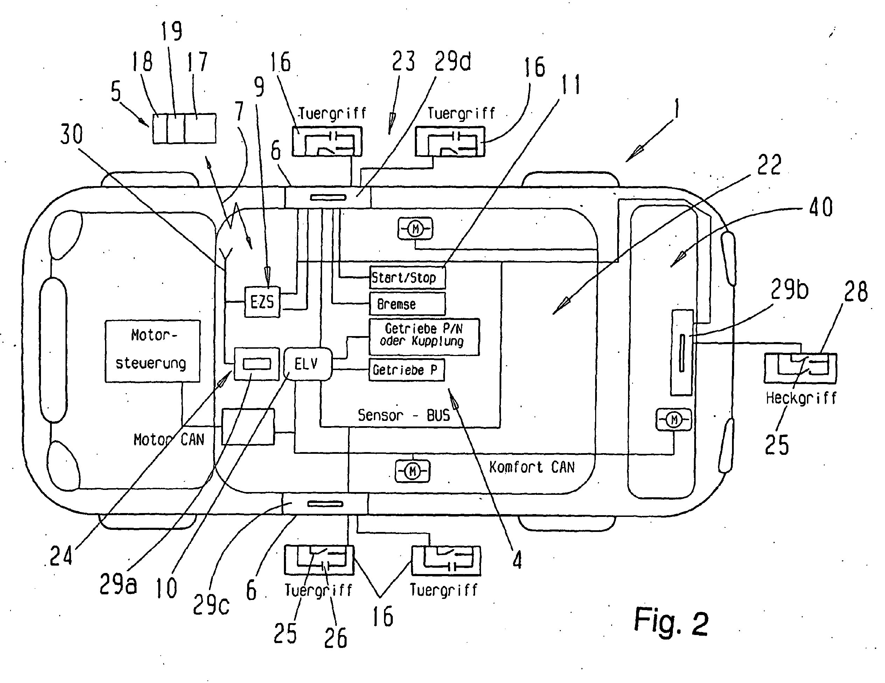

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloß EZS) und/oder der Lenkradverriegelung 10 (elektrische Lenkradverriegelung ELV), die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs 28 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich der vom Benutzer 2 manuell betätigbare Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Der ersten Einrichtung 4 ist dabei wenigstens eine Antenne 29, 30 zur Übertragung der Signale 7 zugeordnet. Durch das Wecksignal 12 wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke mißt die Feldstärke beziehungsweise die Intensität eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein. Durch entsprechende Auswertung des RSSI-Signals läßt sich dann die Standortbestimmung in der Logikschaltung 18 vornehmen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentikation auf, so daß bei Vorhandensein beider Linien im Wirkbereich 8 lediglich eine Authentikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentikation zu gestatten.

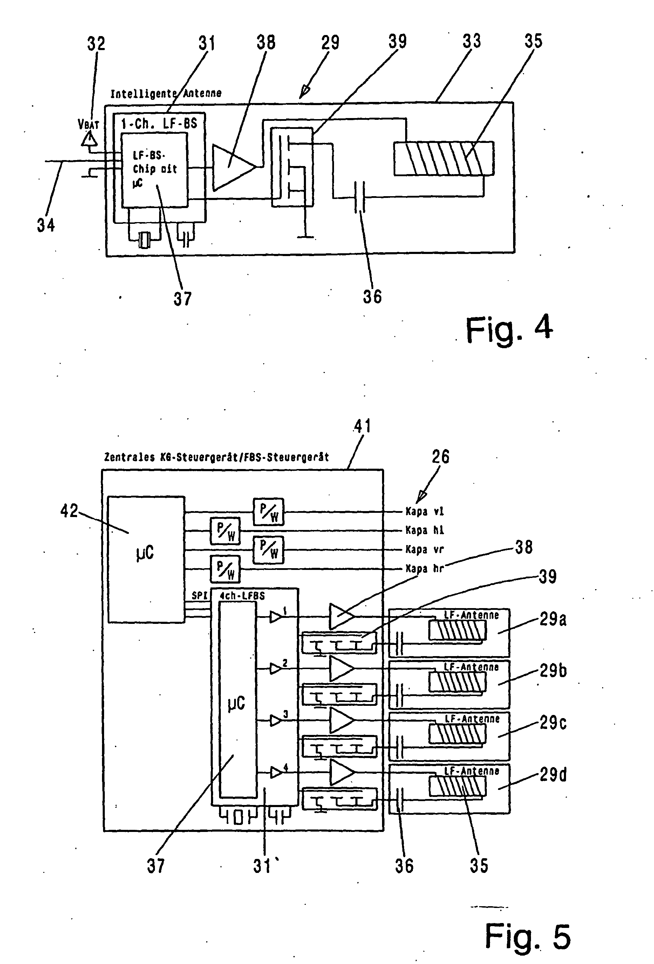

Die Antenne 29, die als Blockschaltbild in Fig. 4 zu sehen ist, ist in der Art einer intelligenten Antenne ausgestaltet. Die Antenne 29 ist mit einem eigenen, von der ersten Einrichtung 4 im wesentlichen unabhängigen Steuergerät 31 versehen. Das Steuergerät 31 dient zur Steuerung und/oder Regelung der Antennenleistung und/oder zur Modulierung der mittels der Antenne 29 zu sendenden Daten, so daß wenigstens einzelne der Signale 7 mit Hilfe des Steuergeräts 31 gesendet werden. Das Steuergerät 31 wird von der Bordnetzspannung 32 im Kraftfahrzeug 1 versorgt und arbeitet daher anders als eine herkömmliche passive Antenne im wesentlichen autark von der ersten Einrichtung 4.

Die Antenne 29 weist ein Gehäuse 33 auf. Das Steuergerät 31 und die eigentliche Antenne 29 sind in dem gemeinsamen Gehäuse 33 integriert angeordnet. Wie den beiden Figuren 3 und 4 zu entnehmen ist, besitzt das Steuergerät 31 der Antenne 29 eine Leitung 34 zur Verbindung zum Fahrzeug 1, um den Datenaustausch vornehmen zu können. Bei der Leitung 34 handelt es sich um eine Art eines Datenbus, beispielsweise um den bekannten LIN-, CAN- o. dgl. BUS. Die Leitung 34 stellt dabei eine Verbindung zur ersten Einrichtung 4 her, in der die Ablaufsteuerung für das Schließsystem 3 sowie die Auswertung der übertragenen Daten erfolgt. Selbstverständlich kann anstelle des Anschlusses an die Bordnetzspannung 32 die Leitung 34 auch für die Spannungsversorgung des Steuergerätes 31 dienen. Bei Verwendung einer erfindungsgemäß ausgestalteten Antenne 29 bietet es sich dann aus Gründen der Kostenersparnis an, daß es sich bei der ersten Einrichtung 4 um das elektronische Zündschloß 9 für das Kraftfahrzeug 1 handelt.

Besonders bevorzugt ist, daß die Trägerwelle für das erste Signal 12 als Wecksignal und/oder das dritte Signal 13 als Bereichsabgrenzungsignal eine im induktiven, niederfrequenten (NF-)Bereich liegende Frequenz aufweist. Beispielsweise kann diese Frequenz in etwa 20 kHz, 120 kHz, 125 kHz o. dgl. betragen. Vorteilhafterweise weist ein solches induktives Signal eine auf die unmittelbare Umgebung des Kraftfahrzeugs 1 begrenzte Reichweite auf. Dadurch wird erreicht, daß die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. Falls gewünscht kann auch das zweite Signal 27, wie in Fig. 3 gezeigt ist, eine im niederfrequenten (NF-)Bereich liegende Frequenz aufweisen. Es ist jedoch besonders bevorzugt, daß die Trägerwelle für das zweite Signal 27 als Selektionssignal und/oder das vierte Signal 14 als Rückantwortsignal und/oder das fünfte Signal 15 als Betriebssignal eine im höherfrequenten (RF-)Bereich liegende Frequenz aufweist. Beispielsweise kann diese Frequenz in etwa 315 MHz, 433 MHz, 868 MHz o. dgl. betragen.

Die als niederfrequente (LF-)Antenne dienende Antenne 29 ist in einfacher Weise in der Art eines Schwingkreises ausgebildet, indem die Antenne 29 eine Spule 35 sowie einen zur Spule 35 in Reihe geschalteten Kondensator 36 umfaßt. Das Steuergerät 31 für die LF-Antenne 29 umfaßt einen Mikroprozessor 37, der einen Operationsverstärker 38 für die Leistungsregelung sowie einen Leistungshalbleiter 39 zum Ein-/Aus-Schalten der Antenne 29 und Aufmodulieren der Daten auf die Trägerwelle ansteuert. Der Leistungshalbleiter 39, beispielsweise ein MOS-FET, ist in Reihe mit dem einen Anschluß der Spule 35 sowie mit dem Kondensator 36 geschaltet. Der andere Anschluß der Spule 35 ist in Reihe mit dem Operationsverstärker 38 geschaltet.

Wie man weiter der Fig. 2 entnimmt, kann das Kraftfahrzeug 1 wenigstens zwei LF-Antennen 29a, 29b besitzen. Dabei ist die eine LF-Antenne 29a dem Innenraum 22 sowie die weitere LF-Antenne 29b dem Kofferraum 40 des Kraftfahrzeugs 1 zugeordnet. Dadurch ist die Erkennung, ob sich die zweite Einrichtung 5 im Innenraum 22 oder im Außenraum 23 sowie gegebenenfalls an welcher Stelle dort befindet, mit Hilfe der entsprechenden RSSI-Signale ermöglicht. Der ersten Einrichtung 4 kann alternativ oder auch zusätzlich eine LF-Antenne 29c, beispielsweise an der fahrerseitigen Autotüre 6 des Kraftfahrzeugs 1, und/oder eine LF-Antenne 29d an der beifahrerseitigen Autotüre 6 zugeordnet sein, die ebenfalls in Fig. 2 zu sehen sind, um auch noch eine Seitenerkennung für das Kraftfahrzeug 1 zu ermöglichen. Der Sender/Empfänger 17 in der zweiten Einrichtung 5 arbeitet schließlich auch als ein induktiver Empfänger, um die Signale der LF-Antennen 29a, 29b, 29c, 29d entsprechend aufnehmen zu können.

Sind mehrere LF-Antennen 29a, 29b, 29c, 29d im Kraftfahrzeug 1 angeordnet, so bietet sich die in Fig. 5 dargestellte Vereinfachung an. Hier ist lediglich ein Steuergerät 31' für die Ansteuerung der mehreren LF-Antennen 29a, 29b, 29c, 29d vorgesehen. Das Steuergerät 31' kann seinerseits Bestandteil eines übergeordneten zentralen KeylessEntry/Go-Steuergeräts 41 sein, wobei das KeylessEntry/Go-Steuergerät 41 unter anderem auch die Näherungssensoren 26 in den jeweiligen Türgriffen 16, nämlich vorne links vl, vorne rechts vr, hinten links hl sowie hinten rechts hr, steuert und auswertet. Falls gewünscht, kann das einen Mikrocomputer 42 aufweisende zentrale KeylessEntry/Go-Steuergerät 41 die Funktion der ersten Einrichtung 4 mit übernehmen.

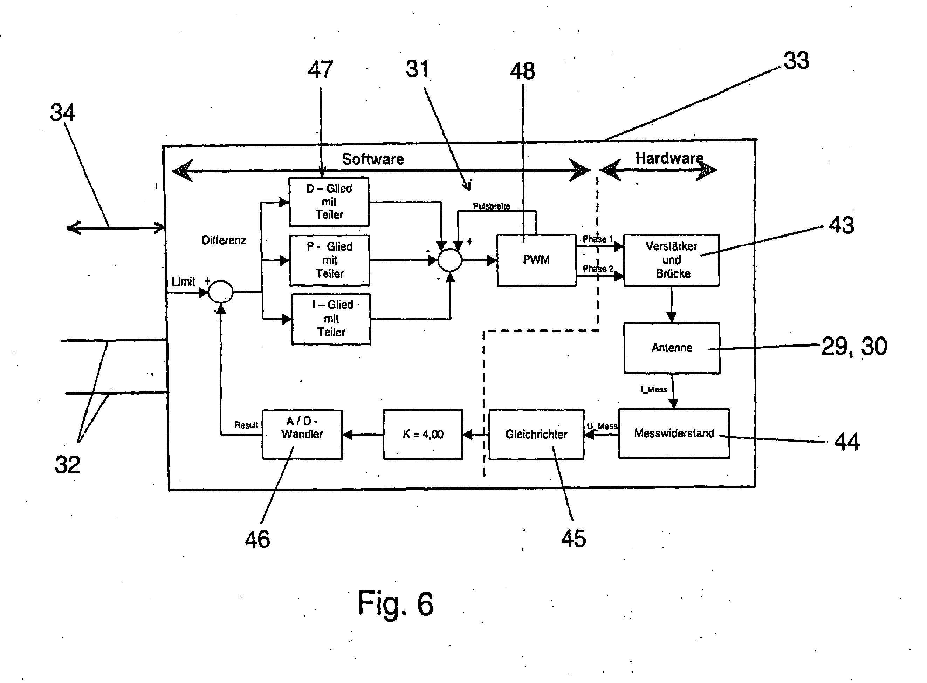

In Fig. 6 schließlich ist als weitere Ausführung ein Gehäuse 33 zur Aufnahme der Antenne 29, 30, die beispielsweise als LF- und/oder RF-Antenne ausgebildet sein kann, mitsamt eines Verstärkers 43 für die Antenne 29, 30 sowie weiterer Komponenten zu sehen. Mit der Antenne 29, 30 steht ein Meßwiderstand 44 in Verbindung, mit dessen Hilfe die Signalstärke für das abgestrahlte Antennensignal meßbar ist. Die gemessene Signalstärke wird mittels eines Gleichrichters 45 und Analog-Digital-Wandlers 46 bearbeitet und einem Regelglied 47 zugeführt. Das Regelglied 47 steuert anhand der gemessenen Signalstärke sowie eines vorgegebenen Sollwertes einen Pulweitenmodulator 48 dementsprechend an. Der Pulsweitenmodulator 48 beaufschlagt wiederum den Verstärker 43, so daß an der Antenne 29, 30 ein geregeltes Signal abgestrahlt wird. Wie der Fig. 6 zu entnehmen ist, kann ein gewisser Teil des Regelkreises in kostengünstiger Weise als Software in einem Mikroprozessor, der dann im Gehäuse 33 befindlich ist, realisiert sein, während nur wenige Komponente als Hardware ausgestaltet sind. Die mit der Antenne 29, 30 zusammenwirkenden Komponenten im Gehäuse 33 sind somit Teil des Steuergeräts 31.

Die Erfindung ist nicht auf das beschriebene und dargestellte Ausführungsbeispiel beschränkt. Die Erfindung umfaßt weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 25:: Schalter (im Türgriff / Heckgriff)
- 26:: (Näherungs)Sensor (im Türgriff)
- 27:: (zweites) Signal / Selektionssignal
- 28:: Heckgriff
- 29,a,b,c,d:: (intelligente) Antenne / LF-Antenne
- 30:: Antenne
- 31,31':: Steuergerät (in Antenne)
- 32:: Bordnetzspannung / Spannungsversorgung
- 33:: Gehäuse (von Antenne)
- 34:: Leitung
- 35:: Spule (von Antenne)
- 36:: Kondensator
- 37:: Mikroprozessor
- 38:: Operationsverstärker
- 39:: Leistungshalbleiter
- 40:: Kofferraum
- 41:: KeylessEntry/Go-Steuergerät
- 42:: Mikrocomputer (im KeylessEntry/Go-Steuergerät)
- 43:: Verstärker
- 44:: Meßwiderstand
- 45:: Gleichrichter
- 46:: Analog-Digital-Wandler
- 47:: Regelglied
- 48:: Pulsweitenmodulator

## Patentansprüche

1. Schließsystem, insbesondere für die Zugangs- undioder Fahrberechtigung bei einem Kraftfahrzeug (1) in der Art einer KeylossEntry/Go-Funktionalität, mit einer wenigstens zwei Zustände besitzenden, als Steuereinrichtung ausgebildeten ersten Einrichtung (4), wie einer Steuereinrichtung zur Ent- und/oder Veniegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Grebers, einer Chipkarte o. dgl. ausgebildeten zweiten Einrichtung (5), wobei die beiden Einrichtungen (4, 5) zu deren bestimmungsgemäßen Betrieb Sender und/oder Empfänger (24,17) für insbesondere elektromagnetische Signale (7) besitzen, wobei es sich insbesondere bei wenigstens einem der zwischen der zweiten Einrichtung (5) und der ersten Einrichtung (4) übertragenen Signale (7) um ein codiertes Betriebssignal (15) zur Authentikation der zweiten Einrichtung (5) handelt, so daß nach positiver Auswertung des übertragenen Betriebssignals (15) bei berechtigter zweiter Einrichtung (5) eine Änderung des Zustandes der ersten Einrichtung (4) bewirkbar ist, wobei der ersten Einrichtung (4) wenigstens eine als niederfrequente Antenne ausgebildete Antenne (29) zur Übertragung der Signale (7) zugeordnet ist, und wobei die Antermenleistung der Antenne (29) gesteuert und/oder geregelt ist, **dadurch gekennzeichnet, daß** die niederfrequente Antenne (29) mit einem eigenen, von der ersten Einrichtung (4) unabhängigen Steuergerät (31) zur Steuerung und/oder Regelung der Antennenleistung und/oder der zu sendenden Daten versehen ist, daß das Steuergerät (31) und die Antenne (29) in einem gemeinsamen Gehäuse (33) integriert angeordnet sind, und daß das Steuergerät (31) für die niederfrequente Antenne (29) einen Mikroprozessor (37) umfaßt, wobei der Mikroprozessor (37) einen Operationsverstärker (38) und/oder einen Leismngshalbleiter (39) ansteuert.

2. Schließsystem nach Anspruch 1, **dadurch gekennzeichnet, daß** das Steuergerät (31) der Antenne (29) eine Leitung (34) zur Verbindung für den Datenaustausch, insbesondere in der Art eines Datenbus, und/oder für die Spannungsversorgung (32) zum Fahrzeug (1) besitzt, daß vorzugsweise die Leitung (34) eine Verbindung zur ersten Einrichtung (4), in der insbesondere die Ablaufsteuerung für das Schließsystem (3) sowie die Auswertung der übertragenen Daten erfolgt, herstellt, und daß es sich weiter vorzugsweise bei der ersten Einrichtung (4) um ein elektronisches Zündschloß (9) für das Kraftfahrzeug (1) handelt.

3. Schließsystem, insbesondere nach Anspruch 1 oder 2, **dadurch gekennzeichnet, daß** die erste Einrichtung (4) und/oder das Steuergerät (31) ein erstes Signal (12) für die zugehörige zweite Einrichtung (5) als Wecksignal sendet, derart daß die zweite Einrichtung (5) aus einem Ruhezustand mit verringertem Energiebedarf in einen aktivierten Zustand für den bestimmungsgemäßen Betrieb übergeführt wird, daß vorzugsweise die erste Einrichtung (4) und/oder das Steuergerät (31) nach Aussenden des ersten Signals (12) wenigstens ein weiteres, drittes Signal (13) als Bereichsabgrenzungssignal sendet, derart daß die zugehörige zweite Einrichtung (5) deren Standort in Bezug auf die erste Einrichtung (4) und/oder das Steuergerät (31), insbesondere am und/oder im Kraftfahrzeug (1), bestimmen kann, daß weiter vorzugsweise nachfolgend die zweite Einrichtung (5) ein den Standort beinhaltendes weiteres, viertes Signal (14) zur ersten Einrichtung (4) und/oder zum Steuergerät (31) sendet, daß noch weiter vorzugsweise das codierte Betriebssignal (15) zur Authentikation der zweiten Einrichtung (5) als fünftes Signal (15) zwischen der zweiten Einrichtung (5) und der ersten Einrichtung (4) und/oder dem Steuergerät (31) übertragen wird, wobei das der Authentikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und daß nochmals weiter vorzugsweise die erste Einrichtung (4) und/oder das Steuergerät (31) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart daß zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

4. Schließsystem, insbesondere nach Anspruch 1, 2 oder 3, **dadurch gekennzeichnet, daß** die Trägerwelle für das erste Signal (12) und/oder das dritte Signal (13) eine im induktiven, niederfrequenten Bereich liegende Frequenz, die beispielsweise in etwa 20, 120, 125 kHz o. dgl. beträgt, aufweist, und daß vorzugsweise die Trägerwelle für das zweite Signal (27) und/oder das vierte Signal (14) und/oder das fünfte Signal (15) eine im höherfrequenten Bereich liegende Frequenz, die insbesondere in etwa 315, 433, 868 MHz o. dgl. beträgt, aufweist.

5. Schließsystem nach einem der Ansprüche 1 bis 4, **dadurch gekennzeichnet, daß** die niederfrequente-Antenne (29) eine Spule (35) sowie einen zur Spule (35) in Reihe geschalteten Kondensator (36) in der Art eines Schwingkreises umfaßt, daß vorzugsweise das Kraftfahrzeug (1) wenigstens zwei niederfrequenten Antennen (29a, 29b) besitzt, wobei insbesondere eine niederfrequente-Antenne (29a) dem Innenraum (22) sowie eine weiter niederfrequente Antenne (29b) dem Kofferraum (40) des Kraftfahrzeugs (1) zugeordnet sind und/oder das Kraftfahrzeug (1) eine gegebenenfalls weitere, der fahrerseitigen und/oder der beifahrerseitigen Autotüre (6) des Kraftfahrzeugs (1) zugeordnete niederfrequente Antenne (29c, 29d) besitzt, und daß weiter vorzugsweise die zweite Einrichtung (5) ein induktiven Empfänger (17) besitzt.

6. Schließsystem nach einem der Ansprüche 1 bis 5, **dadurch gekennzeichnet, daß** der Leistungshalbleiter (39) in Reihe mit dem einen Anschluß der Spule (35) sowie gegebenenfalls mit dem Kondensator (36) geschaltet ist, daß vorzugsweise der andere Anschluß der Spule (35) in Reihe mit dem Operationsverstärker (38) geschaltet ist, und daß weiter vorzugsweise ein Steuergerät (31') für die Ansteuerung von mehreren niederfrequenten Antennen (29a, 29b, 29c, 29d) vorgesehen ist.

## Claims

1. Locking system, in particular for access and/or drive authorisation in a motor vehicle (1) in the form of a Keyless Entry Go functionality, comprising a first device (4) designed in the form of a control device with at least two phases, such as a control device for unlocking and/or locking the vehicle doors (6), the ignition lock (9), the steering wheel lock (10), for releasing and/or locking the immobiliser, the engine control device or the like, and with an associated second device (5) designed in the form of an electronic key, an ID-transponder, a chip card or the like, wherein both devices (4, 5) for their intended operation have transmitters and/or receivers (24,17) for in particular electromagnetic signals (7), wherein in particular at least one of the signals (7) transmitted between the second device (5) and the first device (4) is a coded operating signal (15) for the authentication of the second device (5), so that after a positive evaluation of the transmitted operating signal (15) with an authorised second device (5) the state of the first device (4) can be changed, wherein the first device (4) is assigned at least one aerial (29) in the form of a low-frequency aerial for transmitting the signals (7), and wherein the power of the aerial (29) is controlled and/or regulated, **characterised in that** the low-frequency aerial (29) is provided with its own control device (31) independent of the first device (4) for controlling and/or regulating the aerial power and/or the data to be sent, **in that** the control device (31) and the aerial (29) are integrated into a common housing (33) and **in that** the control device (31) for the low frequency aerial (29) comprises a microprocessor (37), wherein the microprocessor (37) controls an operational amplifier (38) and/or a power semiconductor (39).

2. Locking system according to claim 1, **characterised in that** the control device (31) of the aerial (29) comprises a connecting line (34) for data exchange, in particular in the form of a data bus, and/or for the power supply (32) to the vehicle (1), **in that** preferably the line (34) provides a connection to the first device (4),
in which in particular the sequential control for the locking system (3) and the evaluation of the transmitted data is performed, and **in that** also preferably the first device (4) is an electronic ignition lock (9) for the motor vehicle (1).

3. Locking system, in particular according to claim 1 or 2, **characterised in that** the first device (4) and/or the control device (31) sends a first signal (12) for the associated second device (5) as an alarm signal, such that the second device (5) is transferred from an idle state with reduced power requirement to an activated state for intended operation, **in that** preferably the first device (4) and/or the control device (31) after transmitting the first signal (12) transmits at least one additional, third signal (13) as a range delimiting signal, such that the associated second device (5) can determine its location in relation to the first device (4) and/or the control device (31), in particular on and/or in the motor vehicle (1), **in that** also preferably afterwards the second device (5) transmits an additional, fourth signal (14) containing the location to the first device (4) and/or to the control device (31), **in that** also preferably the coded operating signal (15) is transmitted for the authentication of the second device (5) as a fifth signal (15) between the second device (5) and the first device (4) and/or the control device (31), wherein the fifth electromagnetic signal (15) used for authentication more preferably is transmitted in a bidirectional communication consisting of several partial signals between the first and the second device (4), and **in that** also preferably the first device (4) and/or the control device (31) transmits between the first and the third signal (12, 13) a second signal (27) to the second device (5) as a selection signal, wherein in particular the second signal (27) contains information about the identity of the motor vehicle (1), such that second devices (5) associated with the first device (4) remain the activated state and non-associated second devices in the activated state are returned to the idle position.

4. Locking system, in particular according to claim 1, 2 or 3, **characterised in that** the carrier wave for the first signal (12) and/or the third signal (13) has a frequency in the inductive, lower frequency range, which for example is about 20, 120, 125 kHz or the like, and **in that** preferably the carrier wave for the second signal (27) and/or the fourth signal (14) and/or the fifth signal (15) has a frequency in the higher frequency range, which is in particular about 315, 433, 868 MHz or the like.

5. Locking system according to one of claims 1 to 4, **characterised in that** the low frequency aerial (29) comprises a coil (35) and a capacitor (36) connected in series with the coil (35) in the form of a resonant circuit, **in that** preferably the motor vehicle (1) has at least two low frequency aerials (29a, 29b), wherein in particular a low frequency aerial (29a) is assigned to the inner chamber (22) and an additional low frequency aerial (29b) is assigned to the boot (40) of the motor vehicle (1) and/or the motor vehicle (1) has possibly an additional low frequency aerial (29c, 29d) assigned to the driver side and/or passenger side vehicle doors (6) of the motor vehicle (1), and **in that** also preferably the second device has an inductive receiver (17).

6. Locking system according to any one of claims 1 to 5, **characterised in that** the power semiconductor (39) is connected in series with one connector of the coil (35) and possibly with the capacitor (36), **in that** preferably the other connector of the coil (35) is connected in series with the operational amplifier (38), and **in that** also preferably a control device (31') is provided for controlling several low frequency aerials (29a, 29b, 29c, 29d).

## Revendications

1. Système de fermeture, en particulier, pour une autorisation d'accès et/ou de marche d'un véhicule automobile (1) du type de fonction accès sans clé/marche, comprenant :
- une première installation (4) réalisée comme installation de commande avec au moins deux états, telle qu'une installation de commande pour déverrouiller et/ou verrouiller les portes (6) du véhicule, la clé de contact (9), le verrouillage du volant de direction (10), pour libérer et/ou bloquer le verrou de déplacement, l'appareil de commande du moteur ou autre, et
- une seconde installation (5) correspondante, réalisée à la manière d'une clé électronique, d'un générateur ID, d'une carte à puce ou analogue,
* les deux installations (4, 5) ayant pour leur fonctionnement déterminé des émetteurs et/ou des récepteurs (24, 17) pour, notamment, des signaux électromagnétiques (7),
* et en particulier pour au moins l'un des signaux (7) échangé entre la seconde installation (5) et la première installation (4), il s'agit d'un signal de fonctionnement (15) codé, pour authentifier la seconde installation (5), de sorte qu'après l'exploitation positive du signal de fonctionnement (15) transmis, on puisse produire une modification de l'état de la première installation (4), la seconde installation (5) étant autorisée,
* au moins une antenne (29) en forme d'antenne à basse fréquence pour transmettre les signaux (7), étant associée à la première installation (4), et
* la puissance de l'antenne (29) est commandée et/ou régulée, système **caractérisé en ce que**
- l'antenne à basse fréquence (29) est munie d'un appareil de commande (31) propre, indépendant de la première installation (4) pour commander et/ou réguler la puissance d'antenne et/ou les données à émettre,
- l'appareil de commande (31) et l'antenne (29) sont intégrés dans un boîtier commun (33),
- l'appareil de commande (31) pour l'antenne basse fréquence (29),
- comprend un microprocesseur (37), et
* le microprocesseur (37) commande un amplificateur opérationnel (38) et/ou un semi-conducteur de puissance (39).

2. Système de fermeture selon la revendication 1,
**caractérisé en ce que**
- l'appareil de commande (31) de l'antenne (29) a une ligne (34) pour la liaison servant à l'échange de données, en particulier à la manière d'un bus de données et/ou pour l'alimentation en tension (32) reliée au véhicule (1),
- de préférence, la ligne (34) établit une liaison avec la première installation (4) dans laquelle se fait en particulier la commande de déroulement du système de fermeture (3) et l'exploitation des données transmises, et
- en outre, la première installation (4) est de préférence, une serrure d'allumage (9) électronique pour le véhicule (1).

3. Système de fermeture, notamment selon la revendication 1 ou 2, **caractérisé en ce que**
- la première installation (4) et/ou l'appareil de commande (31) envoie un premier signal (12) pour la seconde installation (5) correspondante sous la forme d'un signal de réveil de façon à faire passer la seconde installation (5) d'un état de repos, à faible consommation d'énergie, à un état actif pour le fonctionnement tel que défini,
- de préférence la première installation (4) et/ou l'appareil de commande (31), après l'émission du premier signal (12) envoie au moins un autre, troisième signal (13) comme signal de limitation de zone de façon que la seconde installation correspondante (5) puisse déterminer son emplacement par rapport à la première installation (4) et/ou l'appareil de commande (31) en particulier sur et/ou dans le véhicule automobile (1),
- en outre, ensuite la seconde installation (5) envoie de préférence, un quatrième signal (14) contenant l'emplacement vers la première installation (4) et/ou vers l'appareil de commande (31),
- et encore ensuite, le signal de fonctionnement (15), codé, est de préférence transmis pour l'authentification de la seconde installation (5) comme cinquième signal (15) entre la seconde installation (5) et la première installation (4) et/ou l'appareil de commande (31),
* le cinquième signal électromagnétique (15) servant à l'authentification étant transmis de manière préférentielle suivant une communication bidirectionnelle composée de plusieurs parties de signal échangées entre la première et la seconde installation (4, 5), et
- encore ensuite, la première installation (4) et/ou l'appareil de commande (31) envoie de préférence entre le premier et le troisième signal (12, 13) un second signal (27) vers la seconde installation (5) comme signal de sélection,
* en particulier, le second signal (27) contenant une information relative à l'identité du véhicule automobile (1) de façon que les secondes installations (5) associées à la première installation (4) restent à l'état activé et que les secondes installations non associées à celle-ci, qui se trouvent à l'état activé, reviennent à l'état de repos.

4. Système de fermeture selon la revendication 1, 2 ou 3,
**caractérisé en ce que**
- la porteuse du premier signal (12) et/ou du troisième signal (13) est une fréquence située dans la plage inductive basse fréquence, qui correspond, par exemple, à environ 20, 120, 125 KHz ou analogue, et
- de préférence la porteuse du second signal (27) et/ou du quatrième signal (14) et/ou du cinquième signal (15) ont une fréquence située dans une plage de fréquences plus élevée qui correspond en particulier à environ 315, 433, 868 MHz ou analogue.

5. Système de fermeture selon l'une des revendications 1 à 4,
**caractérisé en ce que**
- l'antenne à basse fréquence (29) comporte une bobine (35) ainsi qu'un condensateur (36) monté en série avec la bobine (35) à la manière d'un circuit oscillant,
- de préférence, le véhicule (1) comporte au moins deux antennes à basse fréquence (29a, 29b),
* en particulier, une antenne à basse fréquence (29a) étant associée au volume intérieur (22) et une autre antenne à basse fréquence (29b) étant associée au volume du coffre (40) du véhicule (1) et/ou le véhicule (1) comportant, le cas échéant, une autre antenne à basse fréquence (29c, 29d) associée à la porte (6) du véhicule (1), côté conducteur et/ou côté passager, et
- en outre, la seconde installation (5) comporte de préférence un récepteur inductif basse fréquence (17).

6. Système de fermeture selon l'une des revendications 1 à 5, **caractérisé en ce que**
- le semi-conducteur de puissance (39) est branché en série avec l'un des branchements de la bobine (35) et, le cas échéant, avec le condensateur (36),
- de manière préférentielle, l'autre branchement de la bobine (35) est branché en série avec l'amplificateur opérationnel (38), et
- en outre, un appareil de commande (31') est de préférence prévu pour commander plusieurs antennes à basse fréquence (29a, 29b, 29c, 29d).
